# EUROPÄISCHE PATENTSCHRIFT

(11) **EP 1 572 488 B1**
(45) Veröffentlichungstag und Bekanntmachung des Hinweises auf die Patenterteilung: **20.06.2007**
(21) Anmeldenummer: 03776844.7
(22) Anmeldetag: 10.11.2003
(51) Int. Cl.: B60K 15/03

(54) **KRAFTSTOFFBEHÄLTER MIT FUNKTIONSBAUTEIL-TRÄGER SOWIE TRÄGER FÜR FUNKTIONSBAUTEILE EINES KFZ-KRAFTSTOFFBEHÄLTERS**
FUEL TANK COMPRISING A SUPPORT FOR FUNCTIONAL COMPONENTS AND SUPPORT FOR FUNCTIONAL COMPONENTS OF A MOTOR VEHICLE FUEL TANK
RESERVOIR DE CARBURANT COMPORTANT UN SUPPORT D'ELEMENTS FONCTIONNELS ET SUPPORT POUR ELEMENTS FONCTIONNELS D'UN RESERVOIR DE CARBURANT D'AUTOMOBILE

(30) Priorität: 20.12.2002 DE 10260953
(43) Veröffentlichungstag der Anmeldung: 14.09.2005
(73) Patentinhaber: Kautex Textron GmbH & Co. KG., 53229 Bonn (DE)
(72) Erfinder: BORCHERT, Matthias, 53179 Bonn (DE); HÄGER, Frank, 53757 St. Augustin (DE); SCHMITZ, Dieter, 53227 Bonn (DE); MAHMUD, Al-Haj Mustafa, 53332 Bornheim (DE); WOLTER, Gerd, 53639 Königswinter (DE); FROITZHEIM, Thomas, 53757 St. Augustin (DE); DEINDÖRFER, Rolf, 53721 Siegburg (DE); KOLF, Walter, 53639 Königswinter (DE); ANKERT, Detlef, 53177 Bonn (DE)
(74) Vertreter: Kierdorf, Theodor
(86) Internationale Anmeldenummer: PCT/DE2003/003715
(87) Internationale Veröffentlichungsnummer: WO 2004/060709

(56) Entgegenhaltungen:
- DE-A- 4 203 705
- DE-A- 10 107 075
- DE-A- 19 833 698
- PATENT ABSTRACTS OF JAPAN vol. 009, no. 022 (M-354), 30. Januar 1985 (1985-01-30) & JP 59 168256 A (NISSAN JIDOSHA KK), 21. September 1984 (1984-09-21)

## Beschreibung

Die Erfindung betrifft einen Kraftstoffbehälter aus Kunststoff mit diversen in diesem enthaltenen Funktionsbauteilen zur Gewährleistung von Funktionen wie Betriebsentlüftung, Betankung, Betankungsentlüftung, Kraftstoffentnahme etc., wobei die Funktionsbauteile auf einem Träger vormontiert sind, der mit diesen bestückt in den Behälter eingesetzt wurde oder bereits bei der Ausformung des Behälters in diesen integriert wurde.

Die Erfindung betrifft weiterhin einen Träger für Funktionsbauteile eines KFZ-Kraftstoffbehälters wie beispielsweise Ventile, Pumpen, Geber, Leitungen und dergleichen.

Insbesondere bei einteilig oder einstückig aus Kunststoff im Extrusionsblasformverfahren hergestellten Kraftstoffbehältern für KFZ werden viele Funktionsbauteile wie beispielsweise Pumpen, Geber, Betriebs- und Betankungsentlüftungsventile, Leitungen oder dergleichen nach Fertigstellung des Behälters in diesen eingebracht. Mit ein Grund hierfür ist, dass viele Komponenten innerhalb des Behälters eine bestimmte Position bzw. Anordnung einnehmen müssen und in dieser Position fixiert werden müssen. Deshalb werden häufig derartige Funktionsbauteile erst nach Fertigstellung des Behälters in diesem angeordnet. Hierzu ist es oftmals erforderlich, verhältnismäßig große Öffnungen in dem Kraftstoffbehälter vorzusehen. Bei komplizierten Tankgeometrien, beispielsweise bei Satteltanks, die bei hinterachsgetriebenen Kraftfahrzeugen verhältnismäßig häufig anzutreffen sind, ist es oftmals erforderlich, in jeder der beiden Hälften des Satteltanks Montage- bzw. Revisionsöffnungen vorzusehen. Schließlich ist es in den meisten Fällen erforderlich, Öffnungen für Betriebs- und Betankungsentlüftungsventile sowie gegebenenfalls für ein Roll-over-Ventil und Entlüftungsleitungen vorzusehen. Die Entlüftungsleitungen werden dann üblicherweise außen am Behälter verlegt bzw. befestigt.

Bekanntermaßen sind Öffnungen in der Behälterwandung potentielle Emmissionsquellen für Kohlenwasserstoffe. Die Behälterwandung ist üblicherweise als mehrschichtiges Coextrudat ausgeführt, welches Barriereschichten für Kohlenwasserstoffe enthält, sodass die Außenhaut des Kraftstoffbehälters weitestgehend impermeabel für Kohlenwasserstoffe ist. Im Bereich von Durchführungen und Öffnungen durch die Behälterwandung, die mittels Abdeckkappen verschweißt sind, kann eine vollständige gasundurchlässige Abdichtung nicht immer gewährleistet werden. Natürlich sind auch Anschlussnippel und Schläuche potentielle Emmissionsquellen.

Es wird daher angestrebt, in der Behälterwandung möglichst wenig Öffnungen vorzusehen und möglichst viele Funktionsbauteile im Inneren des Kraftstoffbehälters anzuordnen.

Hinsichtlich der Kohlenwasserstoffpermeation wird eine komplexe Tankgeometrie wie ein Satteltank mit nur einer einzigen Öffnung (abgesehen von dem Einfüllstutzen) als ideal angesehen.

Ein Kraftstoffbehälter der eingangs genannten Art, der im Hinblick auf die vorstehende Problematik optimiert ist, ist beispielsweise aus der DE 101 07 075 A1 beschrieben. Die DE 101 07 075 A1 betrifft einen Kraftstoffbehälter mit im Behälterinneren angeordneten, als Kraftstoffsystemkomponenten bezeichneten Funktionsbauteilen, die bei der Ausformung des Behälters in diesen integriert werden. Die Funktionsbauteile bzw. Kraftstoffsystemkomponenten sind auf einem Trägerelement angeordnet und zusammen mit diesem in einem Vorformling angeordnet, der nachfolgend den Kraftstoffbehälter bildend um das Trägerelement und die Kraftstoffsystemkomponenten herum ausgeformt wird. Bei diesem bekannten Kraftstoffbehälter werden alle aus dem Behälter führenden Verbindungsleitungen durch eine einzige Behälteröffnung geführt, um die Anzahl der Öffnungen in der Behälterwandung zu minimieren.

Der Träger ist als etwa flächiges, etwa quer zur Längserstreckung des Tanks ausgerichtetes Element ausgebildet, an welchem die Funktionsbauteile in einer Schwalbenschwanzführung verschieblich befestigt sind. Der Träger ist mit der Innenwandung des Kraftstoffbehälters verschweißt und dient gleichzeitig als die Schwallbewegungen des in dem Behälter befindlichen Kraftstoffs brechendes Element. Aus diesem Grund wird auch die Anordnung quer zur Längserstreckung des Kraftstoffbehälters bevorzugt.

Die in der DE 101 07 075 A1 beschriebene Lösung ist im Hinblick auf die Steifigkeit des Kraftstoffbehälters allerdings nachteilhaft. Die in den Kraftstoffbehälter eingebrachte Trägerstruktur versteift den Kraftstoffbehälter unter Umständen so weit, dass dessen Widerstandsfähigkeit gegen aufprallbedingte Stöße beeinträchtigt ist. Andererseits ist eine feste Position des Trägers innerhalb des Kraftstoffbehälters gewünscht, um eine entsprechende Positionsgenauigkeit der Funktionsbauteile innerhalb desselben zu gewährleisten.

Je nachdem, aus welchem Material der Träger besteht, in der Regel wird es sich hierbei um ein spritzgegossenes Bauteil handeln, kann dessen Einbringung während der Ausformung des Behälters auch Probleme durch etwa auftretende Schrumpfspannungen beim Abkühlen des Kraftstoffbehälters in der Blasform verursachen. In der Regel wird sich das Material des Trägers, bedingt durch dessen Herstellungsverfahren, beispielsweise durch Spritzgießen, in seinen Eigenschaften von demjenigen des Kraftstoffbehälters unterscheiden.

Der Erfindung liegt daher die Aufgabe zugrunde, einen Kraftstoffbehälter der eingangs genannten Art hinsichtlich dessen Belastbarkeit gegen Fallstöße und im Hinblick auf eine flexible Anordnung der Funktionsbauteile innerhalb des Behälters zu verbessern.

Die Aufgabe wird gelöst mit den Merkmalen des Anspruchs 1.

Der Kraftstoffbehälter gemäß der Erfindung zeichnet sich dadurch aus, dass der Funktionsbauteil-Träger als Kraftstoff durchflutbarer extrusionsblasgeformter Hohlkörper ausgebildet ist. Ein solcher Hohlkörper lässt sich verhältnismäßig dünnwandig und einfach mit einer räumlich komplexen Kontur herstellen, sodass hinsichtlich der Anordnung der Funktionsbauteile im Kraftstoffbehälter und der Fixierung des Trägers innerhalb des Behälters eines hohes Maß an Flexibilität gegeben ist.

Bei einer besonders bevorzugten Variante des Kraftstoffbehälters nach der Erfindung ist der Funktionsbauteil-Träger nachgiebig gegen die Behälterinnenwandung abgestützt, sodass sich eine verhältnismäßig hohe Belastbarkeit des Behälters gegen aufprallbedingte Stoßeinwirkung ergibt. Dies ergibt sich bereits daraus, dass der Träger selbst als Hohlkörper ausgebildet ist, wodurch sich ein gewisses Maß an konstruktionsbedingter Nachgiebigkeit einstellt. In dieser Hinsicht besonders vorteilhaft ist es jedoch, Wenn der Funktionsbauteil-Träger einstückig in dessen Wandung ausgebildete, federnd nachgiebige.Stützfüße auf weist.

Die Stützfüße können beispielsweise als balgförmige Ausprägungen des Funktionsbauteil-Trägers ausgebildet sein.

Durch die räumliche Erstreckung des Trägers als Hohlkörper ist es möglich, diese Ausprägungen an beliebiger Stelle am Umfang des Trägers vorzusehen, sodass eine besonders vorteilhafte Anpassung der Lage der Befestigungspunkte des Trägers an die Behältergeometrie erfolgen kann.

Es ist dabei für den Fachmann selbstverständlich, dass der Träger aus einem im Sinne der Verschweißbarkeit mit der Behälterinnenwandung kompatiblen Material besteht und dass im Bereich der Stützfüße eine Verschweißung zwischen dem Träger und der Behälterinnenwandung bei Ausformung des Behälters erfolgen kann.

Zweckmäßigerweise ist die Wandung des Funktionsbauteil-Trägers mit Öffnungen zur Aufnahme der Funktionsbauteile versehen.

Vorzugsweise sind die Öffnungen zumindest teilweise kragenförmig ausgestülpt oder mit einstückig angeformten Befestigungskragen versehen. Hierdurch ist.es leicht möglich, Ventilgehäuse oder dergleichen in diese Öffnungen einzusetzen und einzuschweißen. Diese Öffnungen können beispielsweise bei der Herstellung des Trägers als domförmige Ausdrückungen oder Erhebungen in dessen Außenkontur vorgesehen worden sein. Durch Aufschneiden der betreffenden "Warzen" entstehen in besonders einfacher Art und Weise jeweils Befestigungs- bzw. Montagesitze für Ventilgehäuse oder dergleichen.

Weiterhin kann die Wandung des Funktionsbauteil-Trägers mit dessen Steifigkeit verringernden Durchbrechungen versehen sein.

Ebenfalls kann der Funktionsbauteil-Träger in vorteilhafter Art und Weise eine Aufteilung des Behältervolumens in mehrere miteinander kommunizierende Teilvolumina bilden. Hierdurch werden durch unterschiedliche Fahrzustände hervorgerufene Schwallbewegungen des Kraftstoffs in dem Behälter eingedämmt.

Zweckmäßigerweise ist der Funktionsbauteil-Träger aus Rezyklat (re-grind) aus der Herstellung des Kraftstoffbehälters gefertigt. Hierdurch ist eine Verschweißbarkeit des Materials mit der Behälterwandung automatisch gewährleistet.

Der Träger wird als extrusionsblasgeformeter Behälter ausgebildet, wobei dessen Durchbrechungen bzw. Öffnungen nach der Ausformung desselben hergestellt wurden.

Die Erfindung wird nachstehend anhand von in den Figuren dargestellten Ausführungsbeispielen erläutert. Es zeigen:
- Fig. 1: eine schematische Ansicht, die die Herstellung eines Funktionsbauteil-Trägers gemäß der Erfindung durch Extrusionsblasformen zeigt,
- Fig. 2: eine Ansicht des Funktionsbauteil-Trägers aus Fig. 1, bei welcher die Behälterwandung zur Aufnahme von Funktionsbauteilen teilweise geöffnet wurde,
- Fig. 3: den mit Funktionsbauteilen bestückten Träger,
- Fig. 4: eine schematische Ansicht, bei der die Einbringung des Funktionsbauteil-Trägers in einen Vorformling für einen Kraftstoffbehälter veranschaulicht ist,
- Fig. 5: den fertig ausgeformten Kraftstoffbehälter gemäß der Erfindung,
- Fig. 6: eine weitere Ansicht des fertigen Kraftstoffbehälters gemäß der Erfindung,
- Fig. 7: eine Variante des noch unbestückten FunktionsbauteilTrägers in perspektivischer Ansicht und
- Fig. 8: eine Variante des Kraftstoffbehälters gemäß der Erfindung mit dem von diesem aufgenommenen Funktionsbauteil-Träger gemäß der in Fig. 7 gezeigten Ausführung.

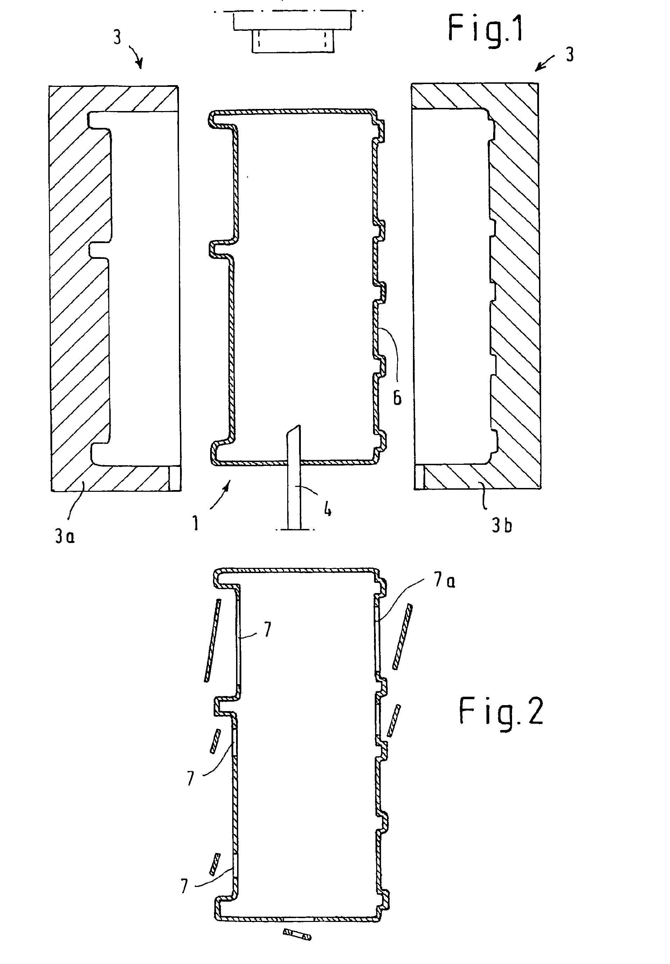

In den Figuren 1 und 2 ist zunächst einmal die Herstellungsweise des Funktionsbauteil-Trägers 1 gemäß der Erfindung veranschaulicht. Es handelt sich hierbei um ein Element, welches, wie vorstehend beschrieben, zur Aufnahme und exakten Positionierung diverser Funktionsbauteile eines Kraftstoffbehälters 2 ausgebildet ist. Hierauf wird nachstehend noch Bezug genommen.

Der Funktionsbauteil-Träger 1 ist als extrusionsblasgeformter Kunststoffhohlkörper ausgebildet. Wie es in Fig. 1 schematisch dargestellt ist (Fig. 1 zeigt den Vorgang des Ausformens), wird zunächst in bekannter Art und Weise ein schlauchförmiger Vorformling aus plastifiziertem Kunststoff zwischen die geöffneten Hälften 3a, 3b einer Blasform 3 extrudiert. Der Vorformling wird sodann in der Blasform 3 mittels eines in diesen eingesetzten Blasdorns 4 zu dem fertigen Bauteil aufgeweitet. Es ist für den Fachmann selbstverständlich, dass der Funktionsbauteil-Träger 1 auch im Tiefziehverfahren hergestellt werden kann. Das Extrusionsblasformen wird hier aus verschiedenen Gründen bevorzugt. Dieses Herstellungsverfahren hat sich unter Kostengesichtspunkten als besonders günstig erwiesen, zumal der nachstehend noch zu beschreibende Kraftstoffbehälter 2 ebenfalls durch Extrusionsblasformen hergestellt wurde. Der Funktionsbauteil-Träger 1 kann in diesem Fall aus dem bei der Herstellung des Kraftstoffbehälters 2 anfallenden Rezyklat (re-grind) hergestellt werden. Dabei ist dann gleichzeitig sichergestellt, dass der Kunststoff des Funktionsbauteil-Trägers 1 kompatibel im Sinne einer Verschweißbarkeit zu dem Kunststoff des Kraftstoffbehälters 2 ist.

Wie aus den Figuren 1 und 2 ohne weiteres ersichtlich ist, wird der Rohling des Funktionsbauteil-Trägers 1 mit höcker- bzw. domförmigen Erhebungen 5 und kreisringförmigen Vertiefungen 6 gefertigt.

Sodann wird der Funktionsbauteil-Träger 1 in einem weiteren Arbeitsgang, der in Fig. 2 andeutungsweise dargestellt ist, mit Montageöffnungen 7 und Durchbrechungen 7a beispielsweise zur Aufnahme von Funktionsbauteilen versehen.

Durch Abschneiden der domförmigen Erhebungen 5 entstehen beispielsweise kragenförmige Ausstülpungen die als Befestigungssitz für Ventilgehäuse dienen können. Es ist beispielsweise möglich, die Ventilgehäuse gegen die Stirnfläche der Ausstülpungen zu verschweißen. Diese Ausstülpungen sind besonders geeignet, die zum Anschweißen erforderlichen Anpressdrücke ohne nennenswerte Verformung aufzunehmen.

Der Funktionsbauteil-Träger 1 wird in einem weiteren Arbeitsgang mit Funktionsbauteilen bestückt. Als Funktionsbauteile sind hier eine Fördereinheit 9 bestehend aus Schwalltopf und Kraftstoffpumpe, ein Füllstandsgeber 10, ein Betriebsentlüftungsventil 11, ein Betankungsentlüftungsventil 12 und diese verbindende Leitungen 13 vorgesehen. Unter Leitungen 13 im Sinne der Erfindung sind sowohl elektrische Leitungen, kraftstoffführende Leitungen als auch Be- und Entlüftungsleitungen zu verstehen. Weitere Funktionsbauteile wie beispielsweise Saugstrahlpumpen, Roll-over-Ventile und Ausperlbehälter können ebenfalls an dem Funktionsbauteil-Träger 1 montiert werden. Mit 14 sind Trennwandelemente bezeichnet, die in den Funktionsbauteil-Träger 1 als Schwalleinbauten eingesetzt wurden. Diese erstrecken sich etwa quer zur Längserstreckung des Funktionsbauteil-Trägers 1 und in Einbaulage innerhalb des Kraftstoffbehälters 2 ebenfalls etwa quer zu dessen Längserstreckung, wie nachstehen noch ausgeführt wird.

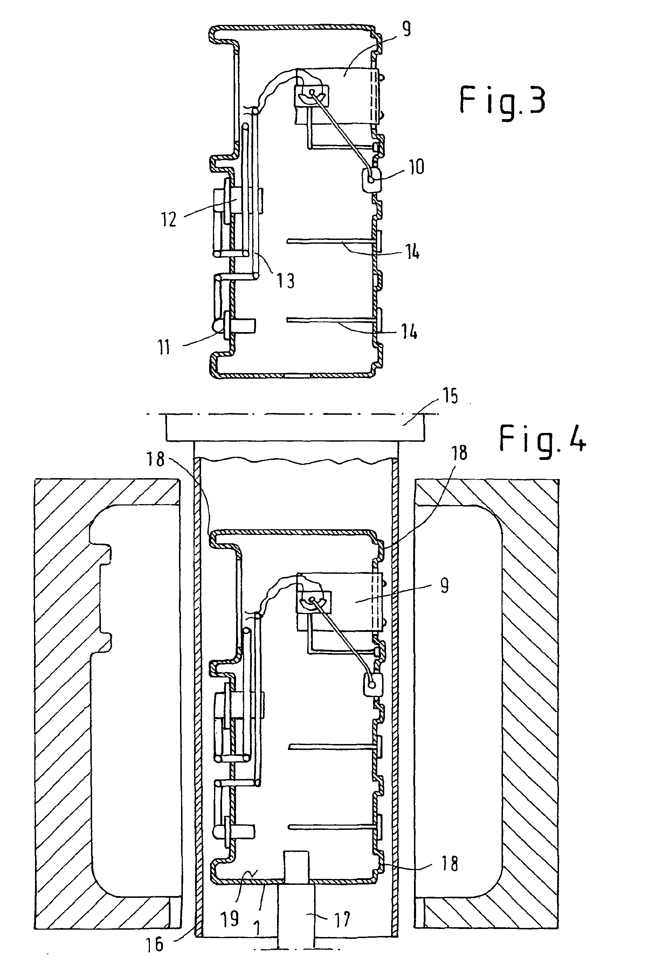

In Fig. 4 ist die Herstellung des Kraftstoffbehälters 2 gemäß der Erfindung veranschaulicht. Dort ist das Herstellungsverfahren in der Phase gezeigt, in der der aus dem Extrusionskopf 15 ausgestoßene Vorformling 16 auf seine volle Länge, die in etwa der Länge des fertigen Kraftstoffbehälters 2 entspricht, extrudiert wurde. In dieser Phase ist der Vorformling 16, der später die Außenkontur des fertigen Kraftstoffbehälters 2 bildet, gegebenenfalls durch Stützluft von unten stabilisiert. Von unten wird nun in den geöffneten, zwischen die Formhälften extrudierten Vorformling 16 über einen Haltedorn 17 der mit Funktionsbauteilen bestückte Funktionsbauteil-Träger 1 eingeführt. Sodann schließen sich die Formhälften der Blasform 3 um die gesamte Anordnung; der Vorformling 16 wird mittels Blasluft in der Blasform 3 auf seine durch die Blasform 3 vorgegebene endgültige Kontur aufgeweitet. Bei diesem Vorgang verschweißt das Material des Funktionsbauteil-Trägers 1 im Bereich von kissenförmigen Stützfüßen 18 mit der Innenwandung 19 des Kraftstoffbehälters 2. Die Stützfüße 18 besitzen, wie nachstehend noch beschrieben wird, eine gewisse Elastizität. Darüber hinaus ist auch der Funktionsbauteil-Träger 1 aufgrund dessen Ausbildung als dünnwandiger Kunststoff-Hohlkörper in sich elastisch, sodass insgesamt eine verhältnismäßig nachgiebige Anordnung des Funktionsbauteil-Trägers 1 in dem Kraftstoffbehälter 2 erzielt wird.

Es sei an dieser Stelle nochmals hervorgehoben, dass der Funktionsbauteil-Träger keine vollständig geschlossene Außenkontur aufweist und somit in Einbaulage in dem Kraftstoffbehälter 2 im Wesentlichen kraftstoffdurchflutet bzw. kraftstoffdurchflutbar ist. Über die Stützfüße 18 ist der Funktionsbauteil-Träger 1 so verdrehsicher, kippsicher und rutschfest in dem Kraftstoffbehälter 2 positionierbar, dass eine exakte Positionierung der Funktionsbauteile in ihrer endgültigen Einbaulage gewährleistet ist, was für die Funktionssicherheit des Kraftstoffbehälters 2 bei extremen Fahrsituationen wie extreme Kurvenlage, extreme Beschleunigung und extreme Verzögerung wichtig ist.

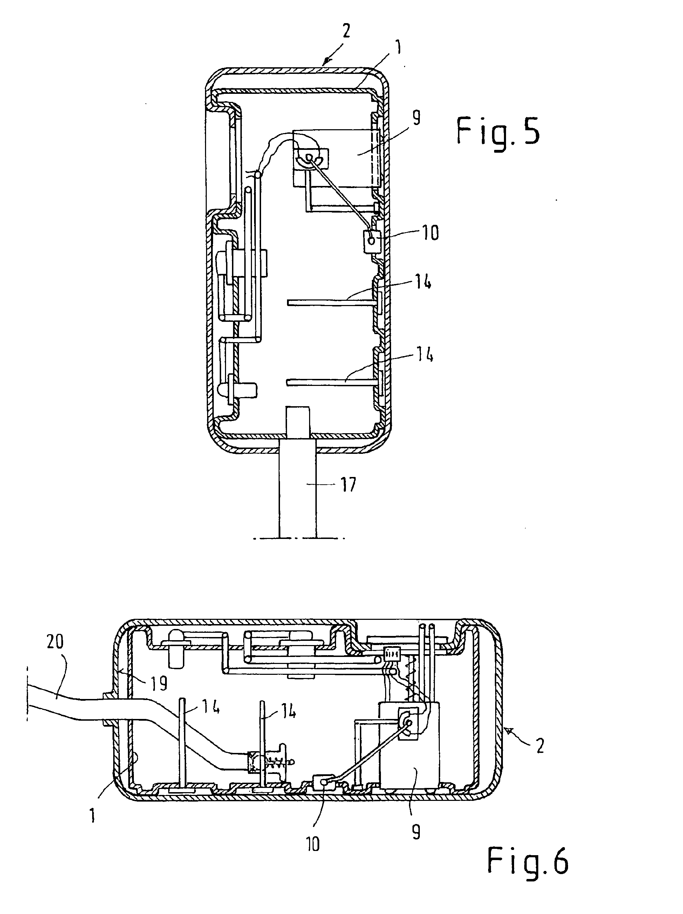

In Fig. 6 ist der Funktionsbauteil-Träger 1 in seiner Einbaulage in dem Kraftstoffbehälter 2 dargestellt, wobei das mit 20 bezeichnete Einfüllrohr endseitig unmittelbar im Inneren des Funktionsbauteil-Trägers 1 mündet.

Bei dem in den Figuren 1 bis 6 dargestellten Ausführungsbeispiel sind sowohl die Geometrie des Kraftstoffbehälters 2 als auch die Geometrie des Funktionsbauteil-Trägers 1 verhältnismäßig einfach gewählt. Darüber hinaus wird davon ausgegangen, dass der Funktionsbauteil-Träger 1 in etwa das gesamte Volumen des Kraftstoffbehälters 2 ausfüllt, sodass der Kraftstoffbehälter 2 letztendlich nur noch eine um den Funktionsbauteil-Träger 1 herum gelegte Mantelfläche bildet.

Die Erfindung ist jedoch so zu verstehen, dass sowohl der Kraftstoffbehälter 2 als auch der Funktionsbauteil-Träger 1 eine verhältnismäßig komplexe Kontur aufweisen können, was in der Praxis recht häufig der Fall sein wird. Gerade dann ist es besonders wichtig, dass der Funktionsbauteil-Träger 1 in gewissen Grenzen nachgiebig exakt an die Innenkontur des Kraftstoffbehälters 2 angepasst ist und im Sinne einer zuvor beschriebenen Funktionssicherheit bei extremen Fahrsituationen exakt und sicher platziert ist.

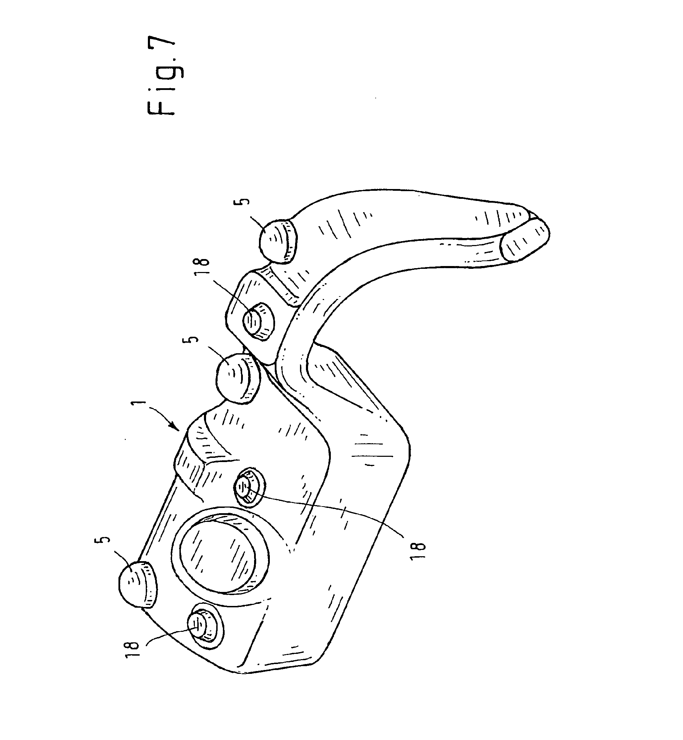

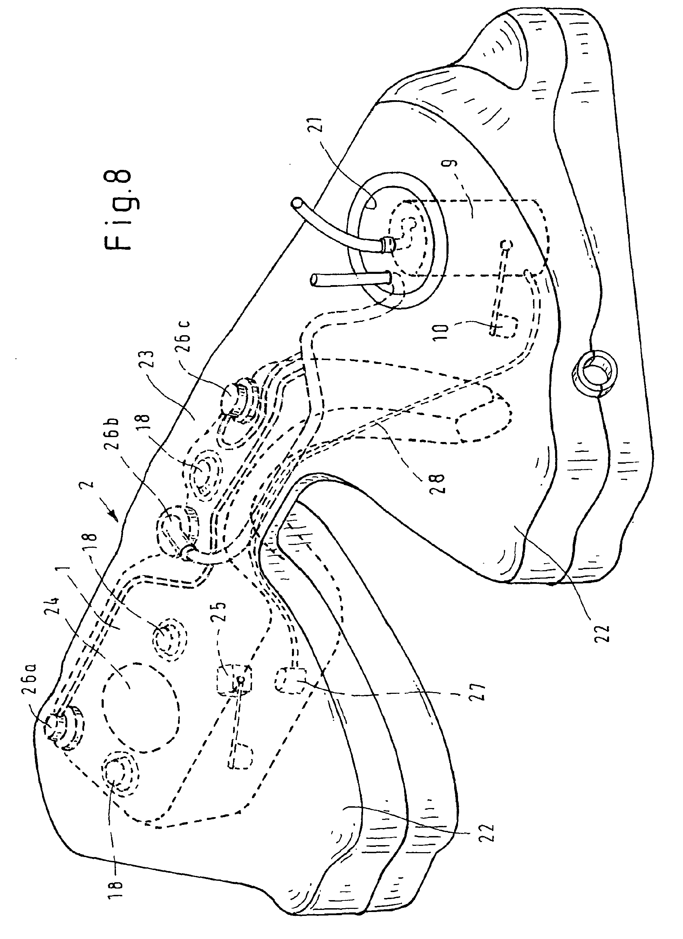

Anhand der Figuren 7 und 8 wird daher nachstehend ein Ausführungsbeispiel beschrieben, bei welchem der Kraftstoffbehälter 2 als Satteltank ausgebildet ist. Diese Variante des Kraftstoffbehälters 2 ist verhältnismäßig häufig bei hinterachsgetriebenen Kraftfahrzeugen anzutreffen. Die relativ komplizierte Kontur des Satteltanks berücksichtigt die Durchführung der Antriebswelle des KFZ im Bereich des Einbauortes.

Der in Fig. 8 dargestellte Kraftstoffbehälter weist, wie übrigens auch der in den übrigen Figuren dargestellte und beschriebene Kraftstoffbehälter 2 nur eine Revisionsöffnung 21 (Service-Flansch) auf, und zwar bedingt durch die erfindungsgemäße Ausbildung und Anordnung des Funktionsbauteil-Trägers 1. Dieser ist in Fig. 7 dargestellt.

Am Beispiel des Satteltanks wird insbesondere der Nutzen des Funktionsbauteil-Trägers 1 gemäß der Erfindung deutlich. Es ist leicht vorstellbar, dass Funktionsbauteile in den beiden Kammern 22 des Kraftstoffbehälters 2 vorgesehen sein müssen. Beispielsweise müssen die Kammern 22 über wenigstens eine Verbindungsleitung miteinander kommunizieren. Üblicherweise wird in derjenigen Kammer 22, in der nicht die Fördereinheit 9 mit Kraftstoffpumpe angeordnet ist, eine Saugstrahlpumpe angeordnet sein. Darüber hinaus werden die beiden Kammern 22 üblicherweise über eine Art Ausgleichsleitung so miteinander kommunizieren, dass ein Ausgleich der Füllstände gewährleistet ist. Aufgrund der relativ stark gekrümmten räumlichen Anordnung und der starken Überhöhung des Sattels 23 des Kraftstoffbehälters 2 können nicht alle Funktionsbauteile über eine Revisionsöffnung 21 in den Kraftstoffbehälter 2 eingebracht werden. Deswegen sind bei herkömmlichen Kraftstoffbehältern 2 dieser Art Revisionsöffnungen 21 in jeder der Kammern 22 vorgesehen.

Aufgrund der erfindungsgemäßen Ausbildung und Einbringung des Funktionsbauteil-Trägers 1 ist nun bei dem in Fig. 8 dargestellten Kraftstoffbehälter 2 nur eine Revisionsöffnung 21 vorgesehen, die beiden Kammern 22 kommunizieren im Wesentlichen über den Funktionsbauteil-Träger 1 miteinander. Aufgrund der Tatsache, dass der Funktionsbauteil-Träger 1 als extrusionsblasgeformtes Bauteil ausgebildet ist, können Rohre und Kammern als integraler Bestandteil desselben ausgebildet sein. Dieser wurde in vorbeschriebener Weise bei der Ausformung des Kraftstoffbehälters 2 mit eingesetzt. Über insgesamt fünf kissenförmige Stützfüße 18 (von denen in der Zeichnung nur drei zu sehen sind), ist der Funktionsbauteil-Träger in der in der Zeichnung linken Kammer 22 und im Bereich des Sattels 23 des Kraftstoffbehälters 2 nachgiebig gegen die Innenwandung 19 desselben abgestützt und in diesem Bereich mit der Innenwandung 19 verschweißt. Der Funktionsbauteil-Träger 1 ist in dem Bereich, in welchem er verhältnismäßig großvolumig ausgebildet ist, zusätzlich mit einer Montageöffnung 24 versehen, durch die beispielsweise der mit 25 bezeichnete Füllstandsgeber in diesen eingesetzt wurde. Die in Fig. 7 dargestellten domförmigen Erhebungen 5 des Funktionsbauteil-Trägers 1 wurden aufgeschnitten und mit den Ventilen 26a, b und c bestückt. Mit 27 ist ein in der linken Kammer 22 innerhalb des Funktionsbauteil-Trägers 1 angeordnete Saugstrahlpumpe bezeichnet, die über eine Verbindungsleitung 28 an die Fördereinheit 9 angeschlossen ist. Im Falle dieses Ausführungsbeispiels übernimmt der Funktionsbauteil-Träger 1 teilweise die Funktion der ansonsten erforderlichen Ausgleichsleitung über dessen rohrförmig gekrümmtes und stirnseitig offenes Ende, welches in der rechten Kammer 22 des Kraftstoffbehälters 2 mündet.

Die Stützfüße 18 sind, wie vorstehend bereits ausgeführt wurde, kissenförmig ausgeprägt. Die Wandung des Funktionsbauteil-Trägers 1 ist randseitig der Stützfüße 18 konzentrisch wellenförmig ausgebildet, sodass hierdurch die Stützfüße 18 federelastisch nachgiebig ausgebildet ist, wodurch schlussendlich gewährleistet wird, dass der in den Kraftstoffbehälter 2 eingesetzte Funktionsbauteil-Träger 1 den Kraftstoffbehälter 2 nicht schädlich stabilisiert, was insbesondere bei aufprallbedingten Stoßeinwirkungen auf den Kraftstoffbehälter 2 schädlich wäre.

### Bezugszeichenliste

- 1: Funktionsbauteil-Träger
- 2: Kraftstoffbehälter
- 3,3a,3b: Blasform
- 4: Blasdorn
- 5: domförmige Erhebungen
- 6: kreisringförmige Vertiefungen
- 7: Montageöffnungen
- 7a: Durchbrechungen
- 9: Fördereinheit
- 10: Füllstandsgeber
- 11: Betriebsentlüftungsventil
- 12: Betankungsentlüftungsventil
- 13: Leitung
- 14: Trennwandelemente
- 15: Extrusionskopf
- 16: Vorformling
- 17: Haltedorn
- 18: Stützfüße
- 19: Innenwandung des Kraftstoffbehälters
- 20: Einfüllrohr
- 21: Revisionsöffnung
- 22: Kammern
- 23: Sattel
- 24: Montageöffnung
- 25: Füllstandsgeber
- 26a,b,c: Ventile
- 27: Saugstrahlpumpe
- 28: Verbindungsleitung

## Patentansprüche

1. Kraftstoffbehälter (2) aus Kunststoff mit diversen in diesem enthaltenen Funktionsbauteilen zur Gewährleistung von Funktionen wie Betriebsentlüftung, Betankung, Betankungsentlüftung, Kraftstoffentnahme etc., wobei die Funktionsbauteile auf einem Träger vormontiert sind, der mit diesen bestückt in den Behälter eingesetzt wurde oder bereits bei Ausformung des Behälters in diesen integriert wurde, **dadurch gekennzeichnet, dass** der Funktionsbauteil-Träger (1) als kraftstoffdurchftutbarer extrusionsblasgeformter Hohlkörper ausgebildet ist.

2. Kraftstoffbehälter nach Anspruch 1, **dadurch gekennzeichnet, dass** der Funktionsbauteil-Träger (1) nachgiebig gegen die Behälterinnenwandung (19) abgestützt ist.

3. Kraftstoffbehälter nach einem der Ansprüche 1 oder 2, **dadurch gekennzeichnet, dass** der Funktionsbauteil-Träger einstückig in dessen Wandung ausgebildete, federnd nachgiebige Stützfüße (18) aufweist.

4. Kraftstoffbehälter nach Anspruch 3, **dadurch gekennzeichnet, dass** die Stützfüße (18) als balgförmige Ausprägungen des Funktionsbauteil-Trägers (1) ausgebildet sind.

5. Kraftstoffbehälter nach einem der Ansprüche 1 bis 4, **dadurch gekennzeichnet, dass** die Wandung des Funktionsbauteil-Trägers (1) mit Öffnungen (7) zur Aufnahme der Funktionsbauteile versehen ist.

6. Kraftstoffbehälter nach Anspruch 5, **dadurch gekennzeichnet, dass** die Öffnungen (7) zumindest teilweise kragenförmig ausgestülpt sind oder mit einstückig angeformten Befestigungskragen versehen sind.

7. Kraftstoffbehälter nach einem der Ansprüche 1 bis 6, **dadurch gekennzeichnet, dass** die Wandung des Funktionsbauteil-Trägers (1) mit dessen Steifigkeit verringernden Durchbrechungen versehen ist.

8. Kraftstoffbehälter nach einem der Ansprüche 1 bis 7, **dadurch gekennzeichnet, dass** der Funktionsbauteil-Träger (1) eine Aufteilung des freien Behältervolumens in mehrere miteinander kommunizierende Teilvolumina bildet.

9. Kraftstoffbehälter nach einem der Ansprüche 1 bis 8, **dadurch gekennzeichnet, dass** der Funktionsbauteil-Träger (1) aus Rezyklat gefertigt wurde.

10. Kraftstoffbehälter nach einem der Ansprüche 1 bis 9, **dadurch gekennzeichnet, dass** der Funktionsbauteil-Träger (1) als extrusionsblasgeformter Behälter ausgebildet ist, dessen Öffnungen (7) und/oder Durchbrechungen (7a) nach der Ausformung hergestellt wurden.

11. Kraftstoffbehälter nach einem der Ansprüche 1 bis 10, **dadurch gekennzeichnet, dass** der Funktionsbauteil-Träger (1) Rohre und/oder Kammern aufweist, die als integraler Bestandteil desselben einstückig mit dem Funktionsbauteil-Träger (1) ausgebildet sind.

12. Träger (1), auf dem Funktionsbauteile eines Kfz-Kraftstoffbehälters (2) wie Ventile, Pumpen, Geber, Leitungen und dergleichen vormontiert sind, **dadurch gekennzeichnet, dass** dieser als extrusionsblasgeformter Hohlkörper mit Montage- und/oder Durchflutungsöffnungen ausgebildet ist.

## Claims

1. Fuel tank (2) made of plastic with various functional components contained therein to fulfil functions such as venting during operation, fuelling, venting during fuelling, fuel extraction etc., the functional components being pre-mounted on a support which while equipped with them was fitted into the container or was already integrated into the container when moulding it, **characterised in that** the functional component support (1) is formed as an extrusion blow moulded hollow body through which fuel can flow.

2. Fuel tank according to Claim 1, **characterised in that** the functional component support (1) is supported flexibly against the tank inner wall (19).

3. Fuel tank according to one of Claims 1 and 2, **characterised in that** the functional component support comprises resiliently flexible support feet (18) formed integrally in its wall.

4. Fuel tank according to Claim 3, **characterised in that** the support feet (18) are formed as bellows-like protrusions of the functional component support (1).

5. Fuel tank according to one of Claims 1 to 4, **characterised in that** the wall of the functional component support (1) is provided with openings (7) to receive the functional components.

6. Fuel tank according to Claim 5, **characterised in that** the openings (7) are at least partially turned out in a collar fashion or are provided with integrally formed fastening collars.

7. Fuel tank according to one of Claims 1 to 6, **characterised in that** the wall of the functional component support (1) is provided with holes reducing its stiffness.

8. Fuel tank according to one of Claims 1 to 7, **characterised in that** the functional component support (1) forms a partition of the free tank volume into a plurality of sub-volumes communicating with one another.

9. Fuel tank according to one of Claims 1 to 8, **characterised in that** the functional component support (1) is made of re-grind.

10. Fuel tank according to one of Claims 1 to 9, **characterised in that** the functional component support (1) is formed as an extrusion blow moulded container whose openings (7) and/or holes (7a) have been produced after moulding.

11. Fuel tank according to one of Claims 1 to 10, **characterised in that** the functional component support (1) comprises tubes and/or chambers which are formed as an integral component thereof in one piece with the functional component support (1).

12. Support (1) on which functional components of a motor vehicle fuel tank (2), such as valves, pumps, sensors, lines and the like are pre-mounted, **characterised in that** it is formed as an extrusion blow moulded hollow body with mounting and/or flow openings.

## Revendications

1. Réservoir de carburant (2) en matière plastique muni de divers éléments fonctionnels qui assurent des fonctions telles que la ventilation de service, le remplissage, la ventilation lors du remplissage, le prélèvement de carburant, etc, les éléments fonctionnels étant montés au préalable sur un support qui, une fois équipé de ces éléments, est introduit dans le réservoir ou est déjà intégré dans ledit réservoir lors du façonnage de ce dernier, **caractérisé en ce que** le support d'éléments fonctionnels (1) est réalisé en tant que corps creux formé par extrusion soufflage à travers lequel peut s'écouler le carburant.

2. Réservoir de carburant selon la revendication 1, **caractérisé en ce que** le support d'éléments fonctionnels (1) est appuyé de façon souple contre la paroi intérieure (19) du réservoir.

3. Réservoir de carburant selon l'une quelconque des revendications 1 ou 2, **caractérisé en ce que** le support d'éléments fonctionnels présente des pieds d'appui (18) élastiquement flexibles, réalisés d'une seule pièce dans sa paroi.

4. Réservoir de carburant selon la revendication 3, **caractérisé en ce que** les pieds d'appui (18) sont réalisés en tant qu'empreintes en forme de soufflet du support d'éléments fonctionnels (1).

5. Réservoir de carburant selon l'une quelconque des revendications 1 à 4, **caractérisé en ce que** la paroi du support d'éléments fonctionnels (1) est munie d'ouvertures (7) pour loger les éléments fonctionnels.

6. Réservoir de carburant selon la revendication 5, **caractérisé en ce que** les ouvertures (7) sont protubérantes vers l'extérieur au moins en partie en forme de col ou sont munies de collerettes de fixation formées d'une seule pièce.

7. Réservoir de carburant selon l'une quelconque des revendications 1 à 6, **caractérisé en ce que** la paroi du support d'éléments fonctionnels (1) est munie de découpes diminuant sa rigidité.

8. Réservoir de carburant selon l'une quelconque des revendications 1 à 7, **caractérisé en ce que** le support d'éléments fonctionnels (1) forme une division du volume libre du réservoir en plusieurs volumes partiels communiquant ensemble.

9. Réservoir de carburant selon l'une quelconque des revendications 1 à 8, **caractérisé en ce que** le support d'éléments fonctionnels (1) est fabriqué à partir de matériau recyclé.

10. Réservoir de carburant selon l'une quelconque des revendications 1 à 9, **caractérisé en ce que** le support d'éléments fonctionnels (1) est réalisé en tant que réservoir formé par extrusion soufflage dont les ouvertures (7) et/ou les découpes (7a) sont fabriquées après le façonnage.

11. Réservoir de carburant selon l'une quelconque des revendications 1 à 10, **caractérisé en ce que** le support d'éléments fonctionnels (1) présente des tuyaux et/ou des compartiments qui sont réalisés d'une seule pièce avec le support d'éléments fonctionnels (1) en tant que partie intégrante de celui-ci.

12. Support (1) sur lequel des éléments fonctionnels d'un réservoir de carburant (2) d'automobile, tels que des soupapes; des pompes, des détecteurs, des conduites et éléments similaires sont pré-montés, **caractérisé en ce que** celui-ci est réalisé en tant que corps creux formé par extrusion soufflage avec des ouvertures de montage et/ou d'écoulement.
